# EUROPEAN PATENT SPECIFICATION

(11) **EP 0 577 921 B1**
(45) Date of publication and mention of the grant of the patent: **03.06.1998**
(21) Application number: 93103310.4
(22) Date of filing: 02.03.1993
(51) Int. Cl.: G07C 13/00

(54) **Election terminal apparatus**
Abstimmungsgerät
Terminal de vote

(30) Priority: 06.07.1992 JP 178686/92
(43) Date of publication of application: 12.01.1994
(73) Proprietor: THE CENTER FOR POLITICAL PUBLIC RELATIONS, INC., Minato-ku, Tokyo (JP)
(72) Inventor: Miyagawa, Takayoshi, Minato-ku, Tokyo (JP)
(74) Representative: Lehn, Werner, Dipl.-Ing.

(56) References cited:
- EP-A- 0 254 561
- EP-A- 0 292 053
- EP-A- 0 420 354
- WO-A-92/03805
- DE-A- 4 000 133
- US-A- 3 779 453
- US-A- 4 015 106

## Description

The present invention relates to a vote input terminal apparatus including a tablet and a display integrated into a unit, means for designating a position on said tablet, means for detecting the designated position, and display control means for controlling said display, said apparatus comprising:
first display means for displaying numbers assigned to or names of some or all of the candidates who may be voted for;
first designating means for selecting one of the candidates displayed by said first display means;
second display means for displaying the name of the candidate selected by said first designating means;
second designating means for confirming a voting operation with respect to the candidate displayed by said second display means; and
means for storing vote information input by said second designating means. Such a vote input terminal apparatus is disclosed in EP-A-0 420 354.

Conventionally, at presidential elections, elections of Diet members, and the like, voters go to polling stations, where the voters write candidate names on ballot papers and cast the ballot papers into ballot boxes. Thereafter, vote counting and totaling of election returns are manually performed.

As described above, in the conventional voting at elections, voting operations, totaling operations, and the like are not automated much. Therefore, it takes much time to perform voting and totaling operations. In addition, vote totaling errors often occur.

The present invention has been made in consideration of the above situation, and has as its object to provide a computer terminal apparatus and a computer system which can be used for voting and totaling operations and the like.

Reference is made to automated electronic voting systems according to US-A-3 779 453, EP-A-0 254 561 and US-A-4 015 106, in which a voter verifies the selected candidate solely on the basis of the display on a display screen of the candidate's name. EP-A-0 420 354 also discloses a development in which the electronic voting system additionally includes an electronic screen on which the names of a list of party candidates and the candidate selected are displayed.

According to the invention from one aspect, there is provided a vote input terminal apparatus as initially defined, characterised in that the second display means is arranged to display, in addition to the selected candidate name, the corresponding party name, the candidate age, and a photographic image of the face of the selected candidate.

This invention can be more fully understood from the following detailed description, given by way of example, when taken in conjunction with the accompanying drawings, in which:
Fig. 1 is a perspective view showing the outer appearance of an election terminal apparatus according to an embodiment of the present invention;
Fig. 2 is a block diagram showing the arrangement of the election terminal apparatus in Fig. 1;
Fig. 3 is a view showing the structure of a control program and the structure of data buffers;
Fig. 4 is a view showing the structure of candidate buffers;
Fig. 5 is a flow chart for explaining the flow of voting processing;
Figs. 6A and 6B are flow charts showing selection function processing in Fig. 5;
Fig. 7 is a flow chart showing recognition function processing in Fig. 5;
Fig. 8 is a view showing the structure of a region data buffer;
Figs. 9 to 14 are views respectively showing examples displayed on the screen of the election terminal apparatus in Fig. 1;
Figs. 15A and 15B are flow charts showing a procedure for screen page output processing;
Fig. 16 is a view showing the arrangement of a screen page output buffer;
Fig. 17 is a block diagram showing the arrangement of a reception terminal apparatus for determining the eligibility of a voter; and
Fig. 18 is a block diagram showing the arrangement of an election computer system.

Embodiments of the present invention will be described below with reference to the accompanying drawings.

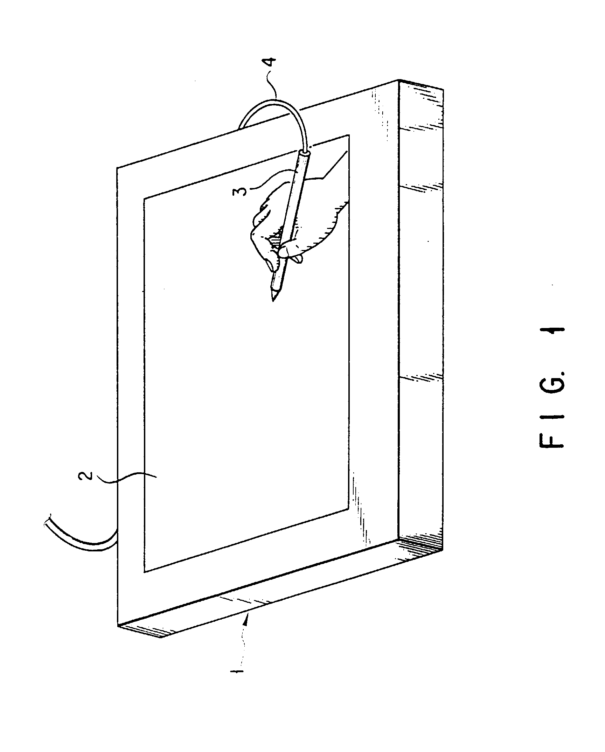

Fig. 1 shows the outer appearance of an election terminal apparatus according to this embodiment. Referring to Fig. 1, a display/input unit 2 is arranged on the upper surface of a casing 1. The display/input unit 2 is constituted by an LCD (liquid crystal display) and a transparent tablet stacked thereon and designed to input coordinates. The display/input unit 2 allows both display and input operations of data on the same coordinates. A pen (stylus) 3 serves to designate a coordinate position on the tablet. The pen 3 incorporates a switch for detecting the contact of the pen 3 with the tablet. The detection result obtained by this switch is informed to the internal circuit of the display/input unit 2 through a cord 4.

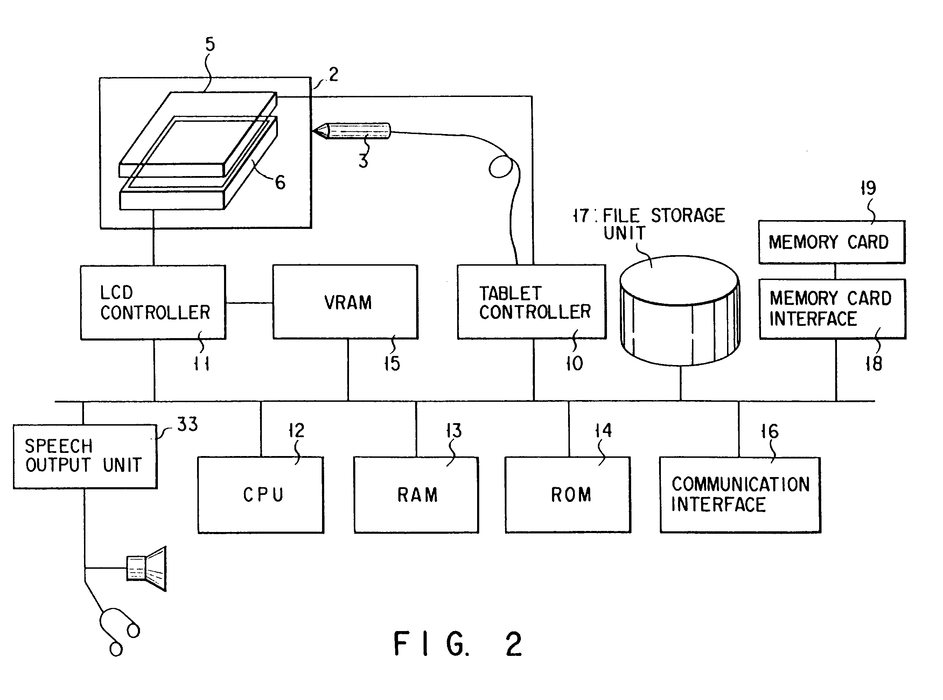

Fig. 2 shows the hardware arrangement of the election terminal apparatus in Fig. 1. The display/input unit 2 is designed such that a transparent tablet 5 is stacked on an LCD 6. The transparent tablet 5 is designed such that transparent electrodes, respectively extending in orthogonal X and Y directions, are arranged on a glass plate in the form of a matrix. The transparent tablet 5 is controlled by a tablet controller 10 to detect X- and Y-coordinates designated by the pen 3. The LCD 6 is controlled by an LCD controller 11 to display images.

A CPU 12 is constituted by a microprocessor or the like and is designed to control the overall operation of this terminal apparatus. A RAM 13 is a memory capable of read/write operations and serves to store operation programs and data for the CPU 12. In addition, the RAM 13 stores information (e.g., display information and position information) associated with a software keyboard displayed on the LCD 6, information on the trace of the pen 3 (a pattern input by handwriting), and the like. A ROM 14 is a read-only memory for storing a diagnosis program which is used after the power switch of the terminal apparatus is turned on, a boot program used to start the system, and the like. A VRAM 15 is a bit map memory for storing image data defining an image to be displayed on the LCD 6.

The tablet controller 10 sequentially applies pulse voltages to the electrodes extending in the X direction and checks voltages at the electrodes extending in the Y direction. When the pen 3 designates a point on the transparent tablet 5, a pulse voltage applied to the X-direction electrode passing through the designated point is also applied to the Y-direction electrode passing through the point owing to electrostatic induction. While the switch in the pen 3 is in an ON state, the tablet controller 10 determines the coordinates of the point of intersection between the X-direction electrode, to which the pulse voltage is applied, and the Y-direction electrode, from which the pulse voltage is detected, as the X- and Y-coordinate data of the position designated by the pen 3, and transfers the obtained X- and Y-coordinate data to the RAM 13.

The LCD controller 11 controls transfer of image data from the VRAM 15 to the LCD 6, transfer of image data from the CPU 12 to the VRAM 15, and the like.

A communication interface 16 includes a communication unit of a wired or radio scheme and serves to exchange data with an external terminal control unit or a host computer.

A file storage unit 17 is constituted by, e.g., an HDD (hard disk drive) and the like and is designed to store dictionary data for character recognition, information associated with candidates, and the like.
In addition, the file storage unit 17 saves information input by a voter. A memory card 19 is connected to a memory card interface 18. The memory card 19 stores an election application program for operating the terminal apparatus as a terminal for an election. This election application program is stored in the RAM 13 through the memory card interface 18 under the control of the CPU 12 when the system is started.

A speech output unit 33 informs a voter of the operating procedure of the terminal apparatus, candidate names, pieces of information about the candidates, and the like by speech through a speaker or a headphone speaker.

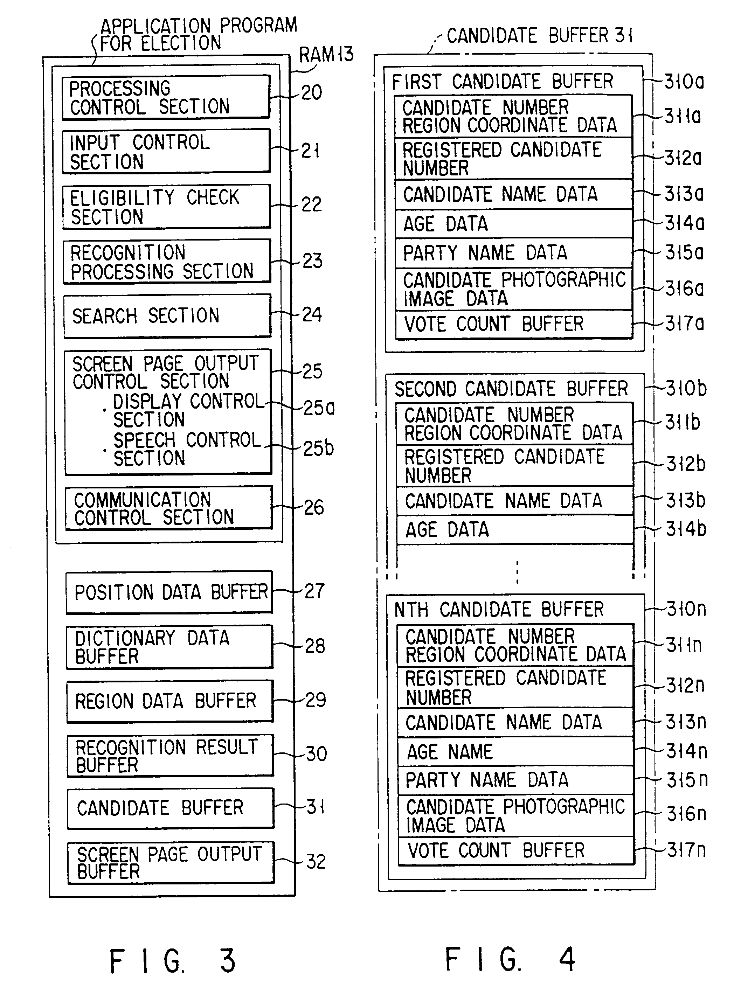

Fig. 3 shows the arrangement of the RAM 13. As described above, the RAM 13 stores the election application program transferred from the memory card 19. The election application program includes a processing control section 20, an input control section 21, an eligibility check section 22, a recognition processing section 23, a search section 24, a screen page output control section 25, and a communication control section 26. The RAM 13 further includes areas respectively serving as a position data buffer 27, a dictionary data buffer 28, a region data buffer 29, a recognition result buffer 30, a candidate buffer 31, and a screen page output buffer 32.

The processing control section 20 is a program for controlling the overall operation of the election application program. The coordinate data of the position, on the transparent tablet 5, designated by the pen 3 are supplied to the input control section 21 through the tablet controller 10.

The eligibility check section 22 serves to check the eligibility of a voter. For example, the eligibility check section 22 checks a person who has no right to vote but tries to vote or a voter who tries to vote a plurality of number of times. Upon detection of a non-eligible voter, the eligibility check section 22 instructs the CPU 12 to invalidate the voting operation of the voter.

When handwritten character recognition is designated, the recognition processing section 23 recognizes characters (numerals in this embodiment) written by a voter from a coordinate data sequence input from the input control section 21.

The search section 24 searches data associated with a candidate from the candidate buffer 31 on the basis of coordinate data supplied from the input control section 21 or characters recognized by the recognition processing section 23.

The screen page output control section 25 is constituted by a display control section 25a and a speech control section 25b. The display control section 25a has the following three functions: (1) transferring display data stored in the screen page output buffer 32 to the LCD 6 through the LCD controller 11; (2) displaying the trace of the pen 3 (characters, lines, and the like handwritten by a voter) on the LCD 6, in real time on the basis of coordinate data supplied from the input control section 21; and (3) causing the LCD 6 to display a command or icon for instructing an operation to be performed. The speech control section 25b supplies speech output data stored in the screen page output buffer 32 to a speech output unit 33.

The communication control section 26 controls the communication interface 16 to perform data transmission control with respect to an external terminal control unit or the like. The position data buffer 27 stores coordinate data supplied from the input control section 21. The dictionary data buffer 28 stores dictionary data used for character recognition processing performed by the recognition processing section 23. The dictionary data is stored in the file storage unit 17 and is transferred therefrom to the dictionary data buffer 28 when the system is started.

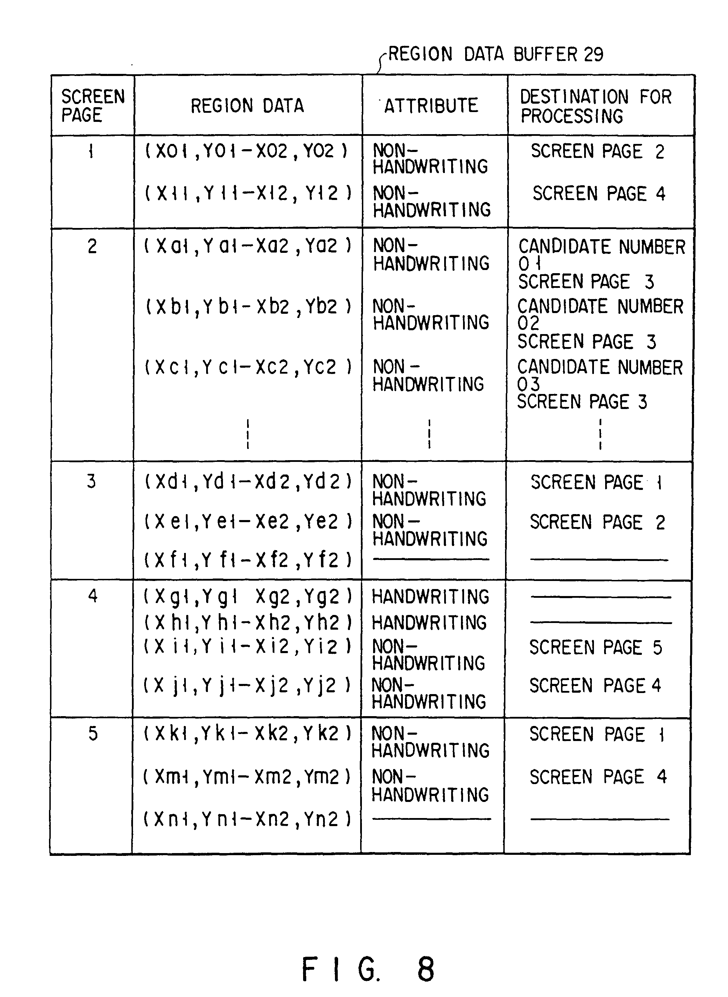

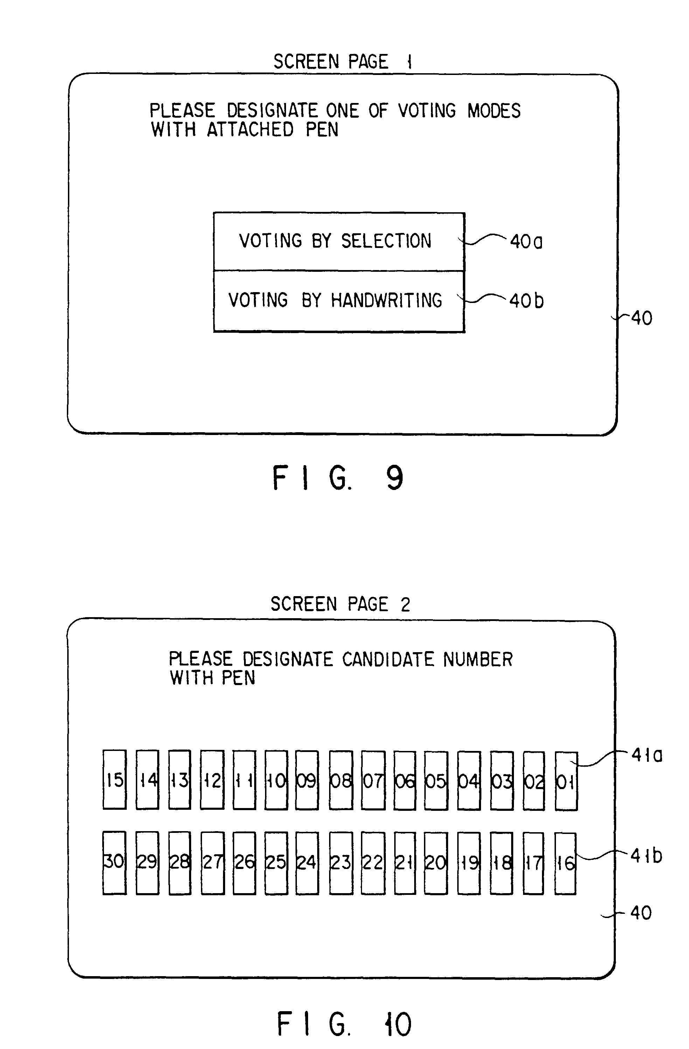

The region data buffer 29 stores X- and Y-coordinate data indicating the display range of a graphic pattern (to be used for inputting data) displayed on the LCD 6, as shown in Fig. 8. The coordinates of the upper left corner and lower right corner of a "VOTING BY SELECTION" region 40a on the screen (screen page 1) shown in Fig. 9 are (X01,Y01) and (X02,Y02), respectively. If, therefore, coordinates detected by the tablet 5 come between the coordinates (X01,Y01) and (X02,Y02), it can be determined that the "VOTING BY SELECTION" region 40a is designated by the pen 3. The recognition result buffer 30 stores character data recognized by the recognition processing section 23.

The candidate buffer 31 comprises candidate buffers 310a to 310n arranged for the respective candidates (a to n) to be managed by the election terminal apparatus, as shown in Fig. 4. Each of the candidate buffers 310a to 310n, as shown in Fig. 4, stores candidate number region coordinate data 311, a registered candidate number 312, candidate name data 313, age data 314, party name data 315, and candidate photographic image data 316, and includes a vote count buffer 317.

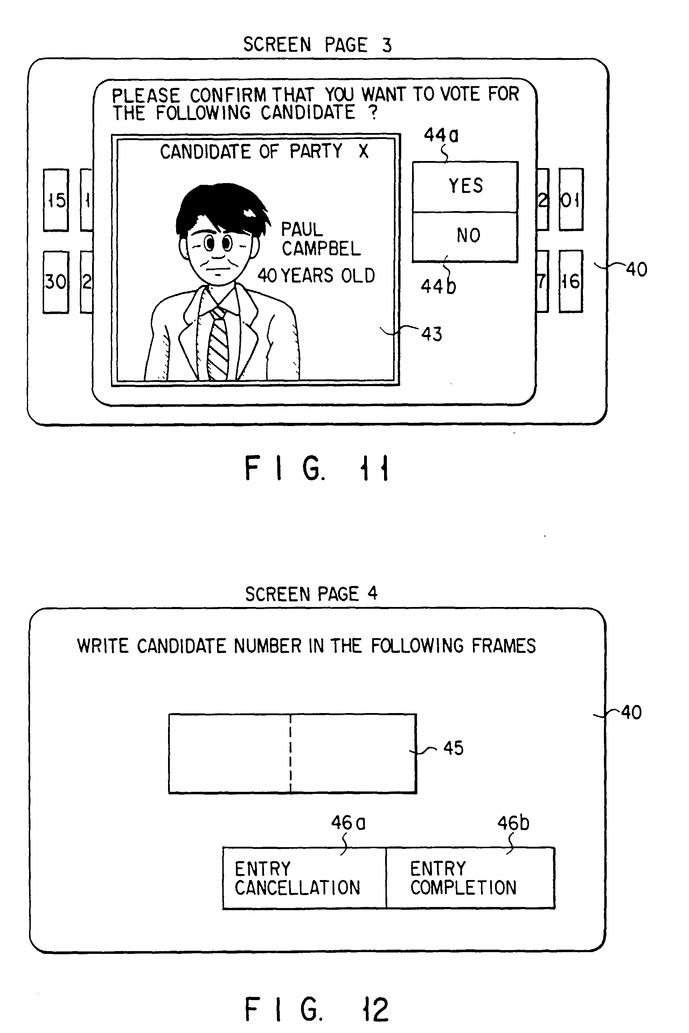

The candidate number region coordinate data 311 is X- and Y-coordinate data indicating a region (icon) in which a corresponding registered candidate number is displayed on the screen shown in Fig. 10 (to be described later).

The registered candidate number 312 is an identification number assigned to each candidate. The party name data 315 indicates the name of a party to which each candidate belongs. The candidate photographic image data 316 is image data for a photograph of each candidate.

The vote count buffer 317 has a counter function. The count value of this counter is incremented by one every time a corresponding candidate receives a vote.

A voting method using the terminal apparatus will be briefly described below with reference to Figs. 9 to 14.

When a voter is to operate the terminal, the screen shown in Fig. 9 is displayed on the LCD 6. The voter selects either "VOTING BY SELECTION" or "VOTING BY HANDWRITING" by using the pen 3. In "VOTING BY SELECTION", the voter votes by selecting the candidate number of a desired candidate from a plurality of numbers displayed on the LCD 6. In "VOTING BY HANDWRITING", the voter votes by writing the candidate number of a desired candidate on the tablet 5.

When the voter selects "VOTING BY SELECTION", the screen shown in Fig. 10 is displayed. The voter selects the candidate number of a desired candidate by using the pen 3. The screen shown in Fig. 11 is then displayed. When the voter wants to vote for the displayed candidate, he/she selects "YES". With the above operation, the processing of "VOTING BY SELECTION" is completed, and the screen shown in Fig. 9 is displayed again. If the voter selects "NO", the screen shown in Fig. 10 is displayed again.

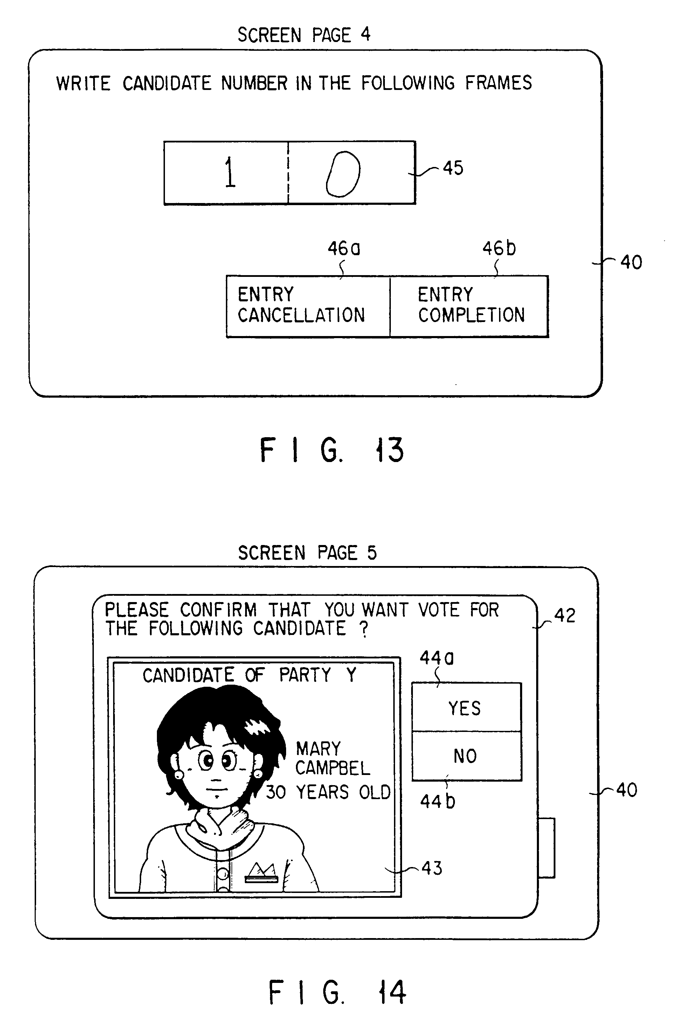

If the voter selects "VOTING BY HANDWRITING" on the screen shown in Fig. 9, the screen shown in Fig. 12 is displayed. As shown in Fig. 13, the voter then writes the candidate number of a desired candidate within a displayed frame by using the pen 3. When the writing operation is completed, the voter designates "ENTRY COMPLETION". The screen shown in Fig. 14 is then displayed. If the voter wants to vote for the displayed candidate, he/she selects "YES". With the above operation, the processing of "VOTING BY HANDWRITING" is completed, and the screen shown in Fig. 9 is displayed again. On the other hand, if the voter selects "ENTRY CANCELLATION" on the screen shown in Fig. 13 and "NO" on the screen shown in Fig. 14, the screen shown in Fig. 12 is displayed again to allow the voter to write again.

In order to discriminate the screens (displays) shown in Figs. 9 to 14, they will be respectively referred to as screen pages 1 to 5 hereinafter.

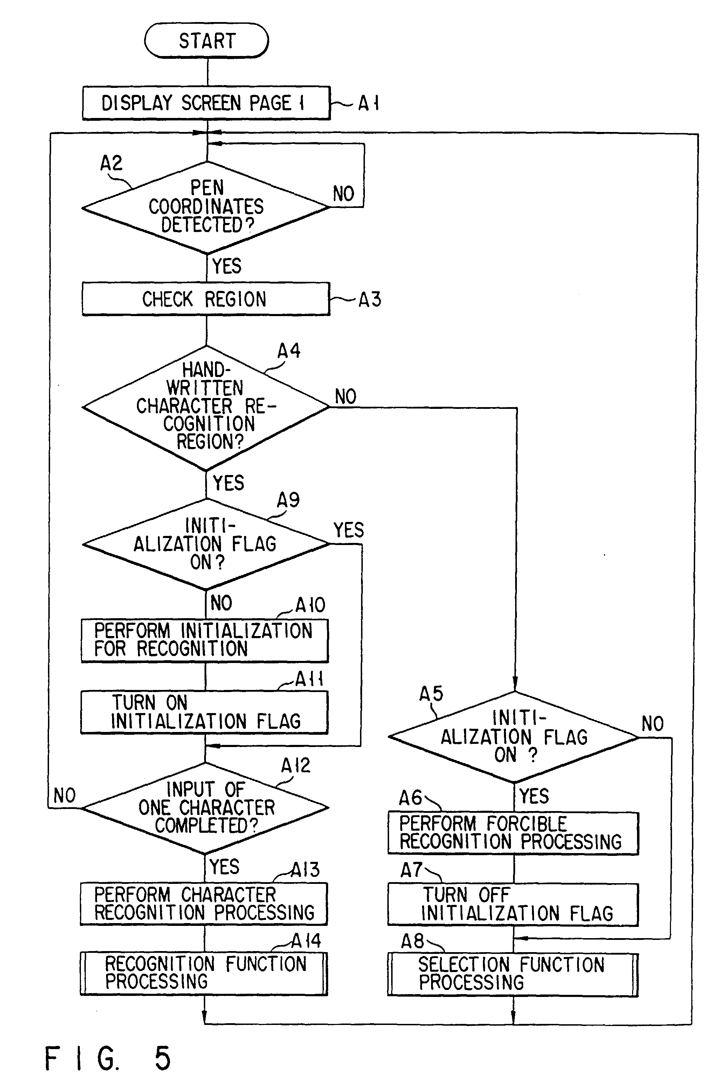

An operation of the election terminal apparatus for enabling the above voting operation will be described in detail below with reference to Figs. 5 to 7 showing flow charts, and Figs. 9 to 14.

When the power switch of the election terminal apparatus is turned on, the system is initialized first. Then, a test for checking the operation of each component of the election terminal apparatus is executed. If normal operations are confirmed, the election application program stored in the memory card 19 is transferred to the RAM 13 through the memory card interface 18.

Subsequently, the election application program transferred to the RAM 13 is started, and the flow chart shown in Fig. 5 is started. The display control section 25a supplies display data, which is used to display an initial screen (screen page 1 in Fig. 9) stored in the screen page output buffer 32, to the LCD 6 through the LCD controller 11, thus causing the LCD 6 to display screen page 1 (Fig. 9) (step A1). Subsequently, the election terminal apparatus waits for a voter to input data (step A2).

When a voter is to vote by using the election terminal apparatus, he/she starts to operate the apparatus from the state in which this initial screen is displayed.

Before a voter votes by using the election terminal apparatus, it is necessary to check whether the voter is eligible and has already voted. The eligibility of the voter is determined by the eligibility check section 22 in Fig. 1. For example, determination of eligibility is performed as follows. ID numbers are assigned to the respective voters, and the ID numbers are registered in the election terminal apparatus in advance. A voter inputs his/her ID number to the election terminal apparatus before voting. The eligibility check section 22 checks whether the input ID number coincides with one of the registered ID numbers. The eligibility check section 22 further checks whether the voter having this ID number has already voted. If the input ID number coincides with one of the registered ID numbers, and the voter having the ID number has not voted yet, the eligibility of the voter is determined. If the eligibility check section 22 determines that the voter is non-eligible, the section 22 inhibits a candidate list from being displayed, and outputs a command for invalidating the terminal operation of the voter to the CPU 12. The CPU 12 may inform the presence of a non-eligible voter to the attendants and the like through a buzzer or the speech output unit 33.

When a voter who is recognized as an eligible voter designates the "VOTING BY SELECTION" region 40a or a "VOTING BY HANDWRITING" region 40b in accordance with a guidance displayed on the initial screen (screen page 1 in Fig. 9) by using the pen 3, the tablet 5 detects the corresponding coordinates (step A2).

The input control section 21 checks a region, on the initial screen (Fig. 9), to which the detected coordinates belong (step A3). As described above, this operation is performed by using screen information registered in the region data buffer 29. More specifically, as shown in Fig. 8, the following pieces of region information are stored in the region data buffer 29 in units of icons of screen pages 1 to 5: region data (the coordinates of the upper left corner and lower right corner of each icon) indicating the display range of each icon, the attribute of each region, the destination for each processing, and the like. The input control section 21 compares the detected coordinates with the region data to discriminate which icon is designated. Assume that the voter designates the "VOTING BY SELECTION" region 40a on screen page 1 (Fig. 9) by using the pen 3. In this case, the input control section 21 compares detected coordinate data x and y with the region data, of screen page 1, stored in the region data buffer 29, and detects that X01 > x > X02 and Y02 > y >Y01, thus determining that the "VOTING BY SELECTION" region 40a is designated.

In step A4, it is checked whether the detected coordinates are located inside a handwritten character recognition region. This handwritten character recognition region corresponds to a region 45 on screen page 4 shown in Fig. 12.

Since the handwritten character recognition region is not present while screen page 1 is displayed, the flow advances to step A5. In step A5, it is checked whether an initialization flag of recognition processing is ON. This initialization flag is set in step A10 (to be described later) when handwritten character recognition processing is started. The initialization flag is normally turned off upon completion of recognition processing. Therefore, the flow normally jumps from step A5 to step A8. If, however, the initialization flag is kept ON for some reason, recognition processing is forcibly executed in step A6 to perform processing as if recognition is performed. Thereafter, the initialization flag is turned off in step A7, and the flow advances to step A8.

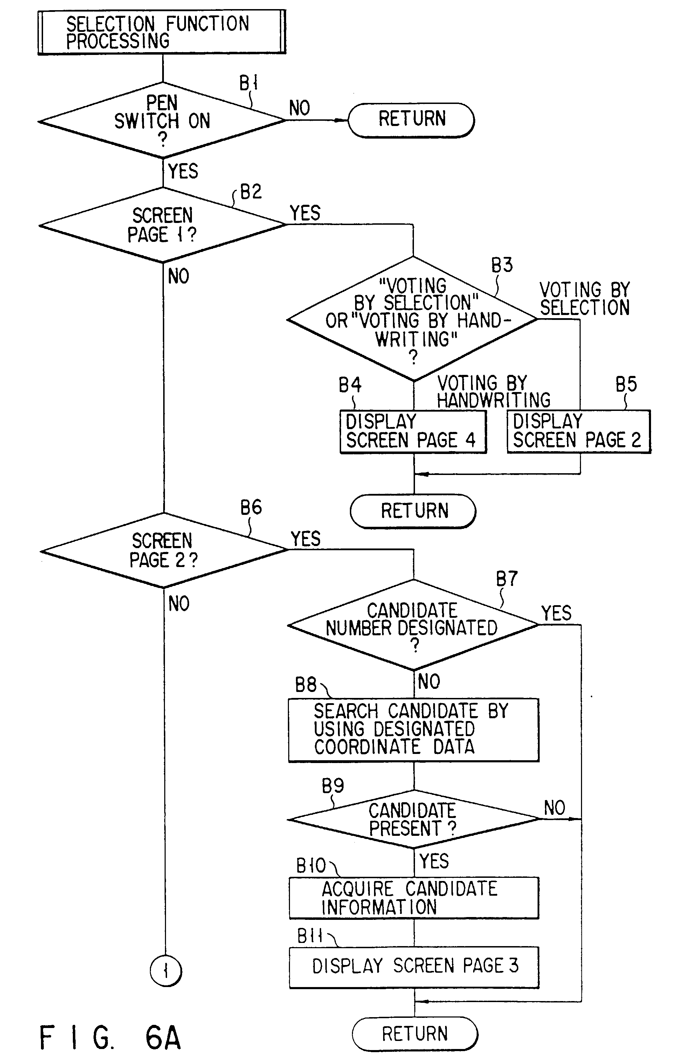

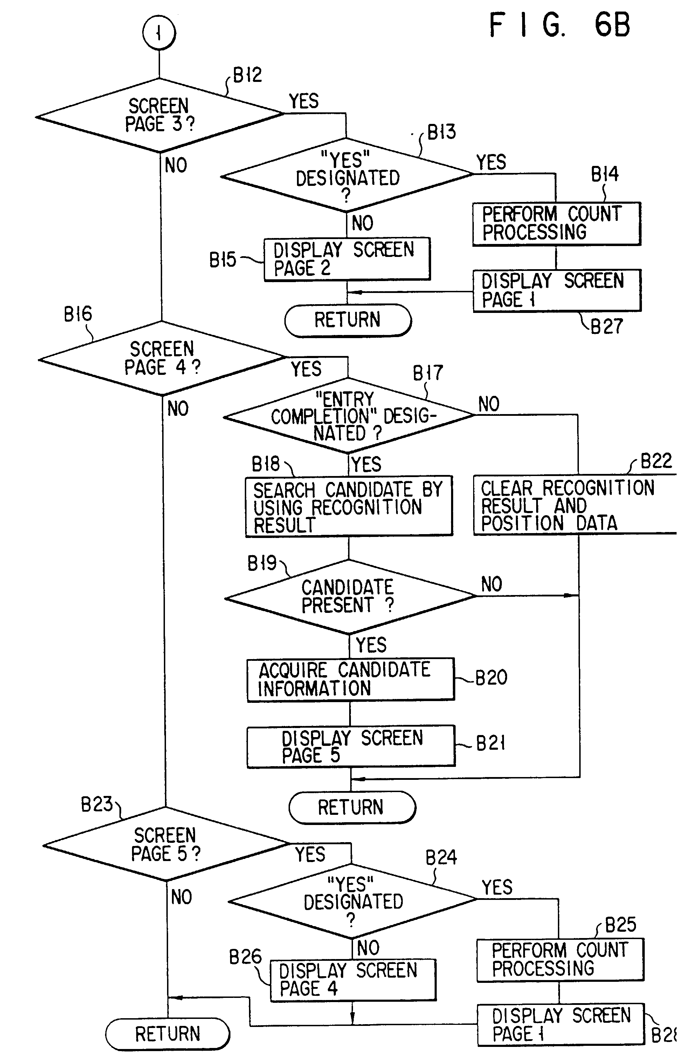

The selection function processing in step A8 will be described below with reference to Figs. 6A and 6B and Figs. 9 to 14.

In step B1 in Fig. 6A, it is checked whether the switch (to be referred to as a stylus switch hereinafter) in the pen 3 is ON. If YES in step B1, the flow advances to step B2. Otherwise, the flow returns to step A2.

In step B2, it is checked whether the display screen is screen page 1. Since YES is obtained in step B2, the flow advances to step B3.

In step B3, it is checked on the basis of the determination result in step A3 whether the "VOTING BY SELECTION" region 40a or the "VOTING BY HANDWRITING" region 40b is designated by the pen 3. If, for example, it is detected that the "VOTING BY SELECTION" region 40a is designated, the flow advances to step B5. In step B5, the display control section 25a supplies display data, used for screen page 2 (Fig. 10) and stored in the screen page output buffer 32, to the LCD 6, thus causing the LCD 6 to display screen page 2. Thereafter, the flow returns to step A2 to wait for the next input. If it is determined in step B3 that the "VOTING BY HANDWRITING" region 40b is designated, the flow advances to step B4. In step B4, the display control section 25a supplies display data, used for screen page 4 (Fig. 12) and stored in the screen page output buffer 32, to the LCD 6, thus causing the LCD 6 to display screen page 4. The flow then returns to step A2.

When screen page 2 (Fig. 10) is displayed on the LCD 6 in step B5, the voter designates the candidate number of a desired candidate by using the pen 3. Since the region of the candidate number is not "HANDWRITTEN CHARACTER RECOGNITION REGION", the flow advances from step A4 to step A5. In this case, since the initialization flag is OFF, the flow jumps from step A5 to step B8.

In step B6, it is detected the display screen is screen page 2, and the flow advances to step B7. In step B7, it is checked on the basis of the region check in step A3 whether a region in which a candidate number is displayed is designated. If YES in step B7, the flow advances to step B8. If NO in step B8, the flow returns to step A2. At this time, an error message may be displayed.

In step B8, the candidate number corresponding to the designated coordinate is specified on the basis of the detected coordinate data. That is, the region data for screen page 2 in the region data buffer 29 is searched by using the detected coordinate data so as to obtain the designated registered candidate number. If no registered candidate number corresponding to the detected coordinate data is present, the absence of this number is detected in step B9, and the flow returns to step A2. In this case, an error message may be displayed.

If the registered candidate number is obtained in step B8, the search section 24 searches the candidate buffer 31 by using the number to acquire candidate information corresponding to the number (step B10).

The display control section 25a displays a candidate didate information screen 43 based on the acquired information (name, age, party name, image data for a photograph, and the like) and a pop up screen 42 while superposing the two screens (Fig. 11). Thereafter, the flow returns to step A2 to wait for the next input.

When the voter confirms that the candidate displayed on the candidate information screen 43 is the one whom he/she supports, he/she designates a "YES" region 44a with the pen 3. The flow then advances to step B13 through steps A2 to A5, B1, B2, B6, and B12. In step B13, it is detected on the basis of the region check in step A3 that the "YES" region 44a is designated. The flow then advances to step B14. In step B14, the search section 24 adds "1" to the value held in a count buffer 318 (a to n) corresponding to the candidate to whom the vote is cast. In this manner, every time a vote is cast, the vote count of a corresponding candidate is updated. With this operation, the voting processing is completed. Control is performed to display the initial screen (screen page 1) (step B27), and the flow returns to step A2 to wait for the next voter to input data.

On the other hand, if the voter confirms that the candidate displayed on the candidate information screen 43 is not the one whom he/she supports, he/she designates a "NO" region 44b with the pen 3. The flow then advances to step B15 through steps A2 to A5, B1, B2, B6, B12, and B13. In step B15, screen page 2 (Fig. 10) is displayed to allow the voter to select a candidate, and the flow returns to step A2.

Assume that the voter designates the "VOTING BY HANDWRITING" region 40b on the initial screen (screen page 1 in Fig. 9) by using the pen 3. In this case, the flow advances to step B4 through steps A2 to A5, (A6, A7), and B1 to B3. In step B4, the display control section 25a transfers the display data, used for screen page 4 (Fig. 12) and stored in the screen page output buffer 32, to the LCD 6, thus causing the LCD 6 to display screen page 4. Thereafter, the flow returns to step A2.

The voter writes the registered candidate number of a desired candidate on the candidate number entry region 45 in Fig. 12 by using the pen 3. This operation is detected in step A2, and the flow advances to step A9 through steps A3 and A4. In step A9, it is checked whether an initialization flag is set. This initialization flag is a flag which is set when the voter starts to write a character in the candidate number entry region 45, and is reset when recognition of the written character is completed. Since the initialization flag is not set at first, initialization processing for character recognition is executed in step A10, and the initialization flag is set in step All.

It is then checked whether writing of one character is completed. While the voter is writing a character, a routine of steps A2, A3, A4, A9, and A12 is repeatedly executed, and the input control section 21 stores coordinate data representing the trace of the pen 3 in the position data buffer 27. During this period, the trace of the pen 3 is displayed by the display control section 25a in real time.

If it is determined in step A12 that writing of one character is completed, the recognition processing section 23 recognizes the written character (numeral) by referring to the coordinate data stored in the position data buffer 27 and the dictionary data held in the dictionary data buffer 28 (step A13). Since this character recognition technique itself is a known technique, a description thereof will be omitted. When recognition of the character is completed, the initialization flag is turned off.

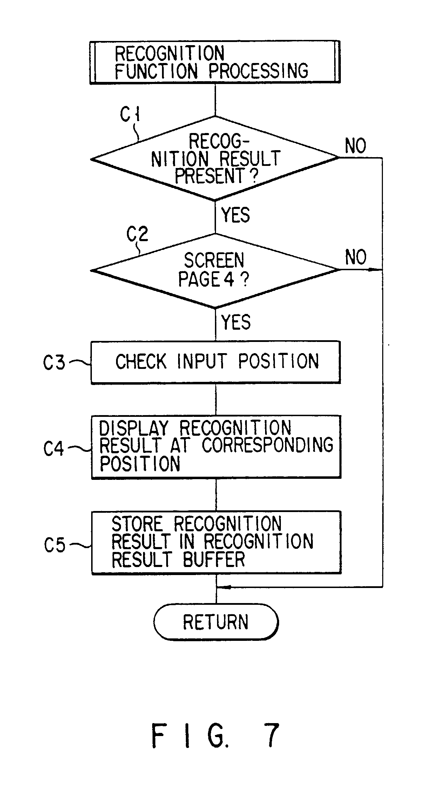

After character recognition is performed in step A13, the flow advances to step A14 to perform recognition function processing. The contents of this recognition function processing will be described below with reference to Fig. 7. In step C1, it is checked whether a recognition result is obtained. In step C2, it is checked whether the screen displayed on the LCD 6 is screen page 4 (Fig. 12). If NO in either step C1 or step C2, the flow returns to step A2.

If the display screen is screen page 4 and a character recognition result is present, the input position (one of the two frames in the candidate number entry region 45) is checked in step C3. This check is executed by the recognition processing section 23 by referring to the position data buffer 27. The recognition result is then displayed at the position obtained in step C3 (step C4). In addition, the recognition processing section 23 stores the recognition result in the recognition result buffer 30 (step C5). The flow returns to step A2.

The voter writes a character in the remaining frame in the same manner as described above. Fig. 13 shows a state wherein the recognized character "1" is displayed in the left frame, and the handwritten character "0" before recognition processing is written in the right frame. When recognition and display of the two characters are completed, the voter checks the characters displayed in the candidate number entry region 45, and designates an "ENTRY COMPLETION" region 46b or "ENTRY CANCELLATION" region 46a by operating the pen 3.

This operation is detected in step A2, and the flow advances to step B17 through steps A3 to A5, B1 to B3, B12, and B16. In step B17, it is checked whether the "ENTRY COMPLETION" region 46b or the "ENTRY CANCELLATION" region 46a is designated.

If the "ENTRY COMPLETION" region 46b is designated, the flow advances to step B18. In steps B18 to B20, similar to steps in B8 to B10, processing for acquiring information associated with the selected candidate is executed. Note that this processing is different from that in steps B8 to B10 in that the search section 24 searches the candidate buffer 31 on the basis of the registered candidate number obtained by the character recognition processing.

When the information associated with the candidate is acquired, the display control section 25a transfers display data, used for screen page 5 (Fig. 14) and stored in the screen page output buffer 32, to the LCD 6, thus causing the LCD 6 to display screen page 5, in step B21. Thereafter, the flow returns to step A2.

On the other hand, if it is determined in step B17 that the "ENTRY CANCELLATION" region 46a is designated, the flow advances to step B22. In step B22, the recognition result and the position data are cleared to set a state which allows recognition of handwritten characters again. Thereafter, the flow returns to step A2.

When screen page 5 (Fig. 14) is displayed on the LCD 6 in step B21, the voter checks whether the candidate displayed on the candidate information screen 43 is the one whom he/she supports. If the displayed candidate is the right one, the voter designates the "YES" region 44a by using the pen 3. The flow then advances to step B24 through steps A2 to A5, B1, B2, B6, B12, B16, and B23. In step B24, it is detected on the basis of the region check in step A3 that the "YES" region 44a is designated. The flow then advances to step B25. In step B25, the search section 24 adds "1" to the value held in the count buffer 318 (a to n) corresponding to the candidate to whom the vote is cast. With the above operation, the voting processing is completed. Control is performed to display the initial screen (screen page 1) (step B28), and the flow returns to step A2 to wait for the next voter to input data.

On the other hand, if the displayed candidate is not the one whom the voter supports, he/she designates the "NO" region 44b by using the pen 3. The flow then advances to step B26 through steps A2 to A5, B1, B2, B6, B12, B16, and B23. In step B26, screen page 4 (Fig. 12) is displayed to allow the voter to select a candidate. Thereafter, the flow returns to step A2.

In the above-described manner, voting operations using the election terminal apparatus are executed.

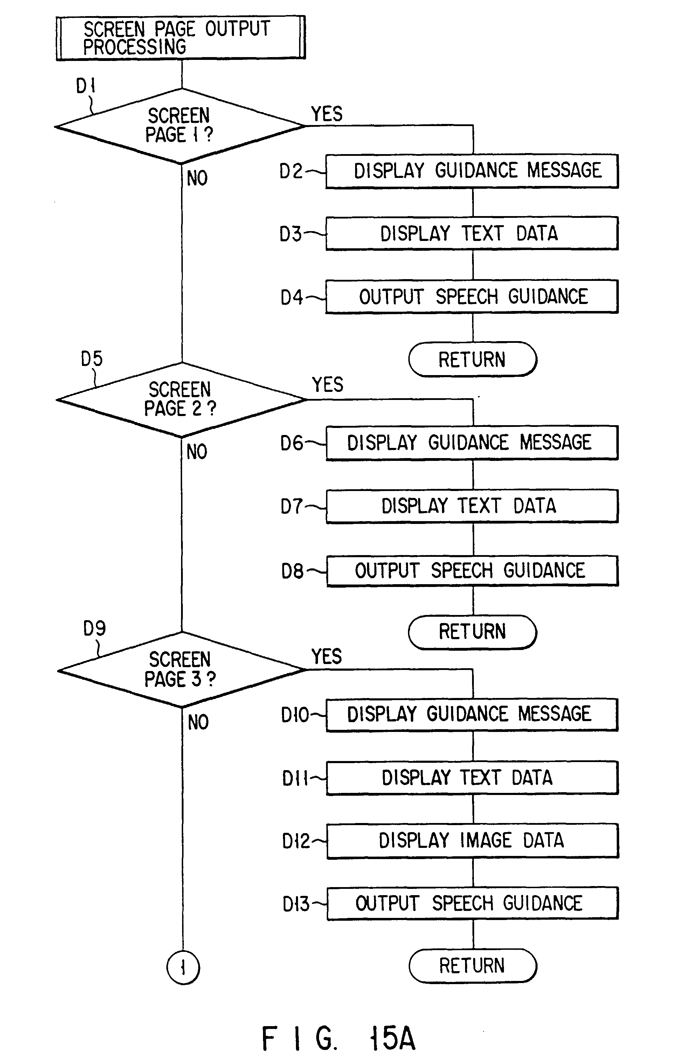

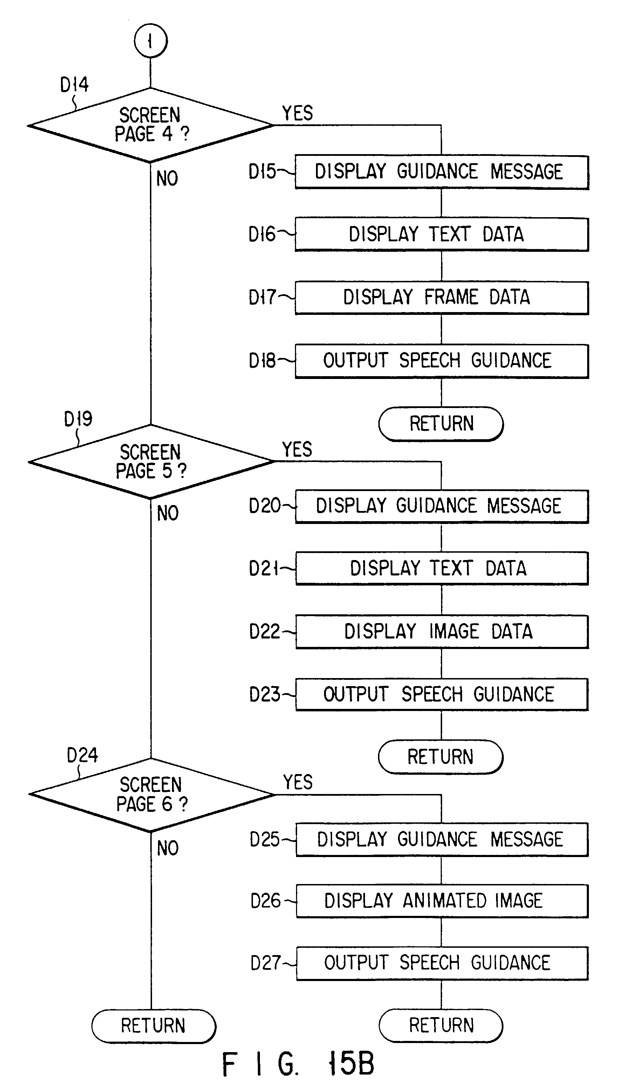

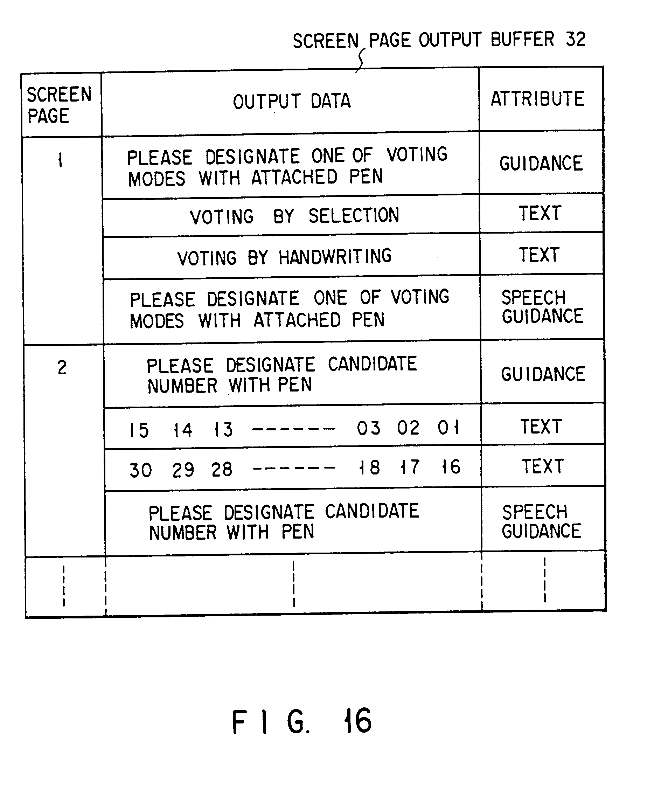

The control operations of the display control section 25a and the speech control section 25b will be described below with reference to Figs. 15A, 15B, and 16.

Steps D1, D5, D9, D14, and D19 shown in Figs. 15A and 15B correspond to steps B2, B6, B12, B16, and B23 shown in Figs. 5A and 5B, in which the page number of the display screen is determined. As shown in Fig. 16, guidance data, text data, and speech guidance data are stored in the screen page output buffer 32 in correspondence with the respective screen pages. Note that the display address data of guidance data, text data, image data, and the like, i.e., addresses on the LCD 6, are omitted from Fig. 16.

If, for example, it is determined in step D1 that the current display screen is screen page 1, the display control section 25a causes the LCD 6 to display guidance data "PLEASE DESIGNATE ONE OF VOTING MODES WITH ATTACHED PEN", which data is used for screen page 1 and stored in the screen page output buffer 32 (step D2). In addition, the display control section 25a causes the LCD 6 to display text data "VOTING BY SELECTION" and "VOTING BY HANDWRITING" (step D3). With this operation, the display shown in Fig. 9 are displayed.

Meanwhile, the speech control section 25b reads out speech guidance data "PLEASE DESIGNATE ONE OF VOTING MODES WITH ATTACHED PEN" from the screen page output buffer 32, and controls the speech output unit 33 to output the data by speech (step D4).

Similarly, in step D5, displaying of guidance and text data and outputting of speech guidance data as speech are performed in correspondence with screen page 2 (steps D6 to D8). In this case, it would be kind to voters if, for example, the names of candidates are output by speech together with registered numbers.

Similarly, in step D9, guidance data, text data, and image data are displayed, while speech guidance data is output by speech, in correspondence with screen page 3 (steps D10 to D13). Similarly, in step D14, guidance data, frame data, text data, and image data are displayed, while speech guidance data is output by speech, in correspondence with screen page 4 (steps D15 to D18). Similarly, in step D19, guidance data, text data, and image data are displayed, while speech guidance data is output by speech, in correspondence with screen page 5 (steps D20 to D23).

Note that after it is detected in steps B13 and B24 in Figs. 5A and 5B that the "YES" region 44a is designated, count processing in steps B14 and B25 may be performed while completion of the voting processing is displayed by characters, speech, and animation (screen page 6), and screen page 1 may be subsequently displayed. In steps D24 to D27, processing for displaying screen page 6 is performed.

By combining the display control section 25a and the speech control section 25b in this manner, an election terminal apparatus with high operability can be provided to voters.

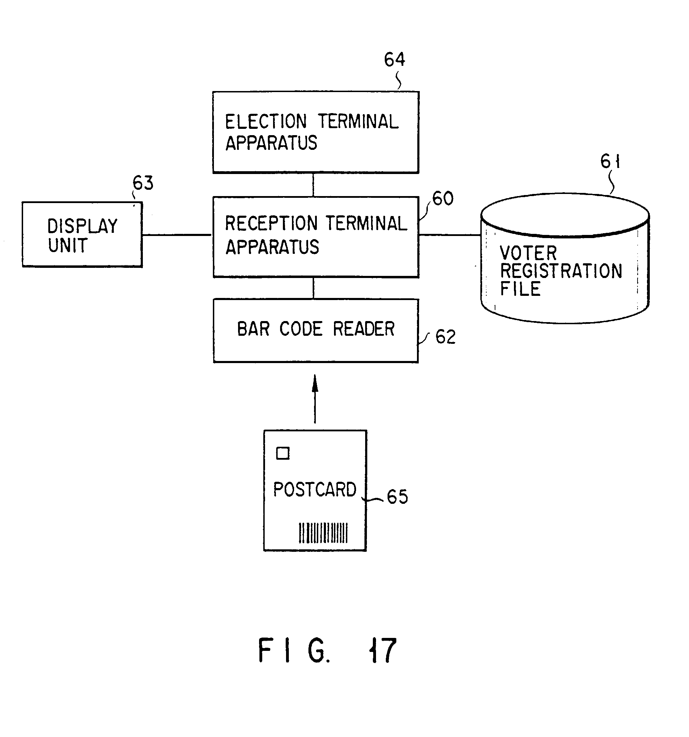

In the above embodiment, the election terminal apparatus includes the mechanism for determining the eligibility of each voter. However, a reception terminal unit may be arranged as a mechanism for determining the eligibility of each voter, as shown in Fig. 17. Referring to Fig. 17, a voter registration file 61, a bar code reader 62, and a display unit 63 are connected to a reception terminal apparatus 60. In the voter registration file 61, voter information (e.g., the number, address, name, and date of birth of each voter) associated with each voter who is to vote in the polling station where the apparatus is installed is registered. In this embodiment, reception postcards for a polling station are mailed or distributed to the respective voters before an election day. Information for identifying each voter (e.g., voter number) is appended to such a postcard. The bar code reader 62 reads a bar code 65 on this reception postcard and outputs the read information to the reception terminal apparatus 60. If the bar code reader 62 cannot read the bar code for some reason, e.g., a stain on the bar code, or the voter lost his/her reception postcard, the identification information is input to the reception terminal apparatus 60 through another input unit such as a keyboard or a tablet.

The reception terminal apparatus 60 searches the voter registration file 61 on the basis of the identification information obtained from the bar code reader 62 or another input unit such as a keyboard or a tablet, and outputs the corresponding voter information to the display unit 63. When an attendant in the polling station confirms from the voter information displayed on the display unit 63 that the corresponding person has the right to vote at the polling station, he/she performs a confirming operation. In response to this confirming operation, the reception terminal apparatus 60 sets a reception completion flag in the corresponding voter file in the voter registration file 61. With this operation, the reception terminal apparatus 60 can check a voter to prevent him/her from non-eligible voting (voting twice). In addition, the reception terminal apparatus 60 allows an eligible voter to vote by using an election terminal apparatus 64.

Note that the election terminal apparatus 64 and the reception terminal apparatus 60 may be connected by an on-line scheme so that when the reception terminal apparatus 60 confirms the eligibility of a voter, the apparatus 60 sends a signal to the election terminal apparatus 64 to automatically activate the election terminal apparatus 64. In addition, ID cards or the like may be used in place of reception postcards with bar codes.

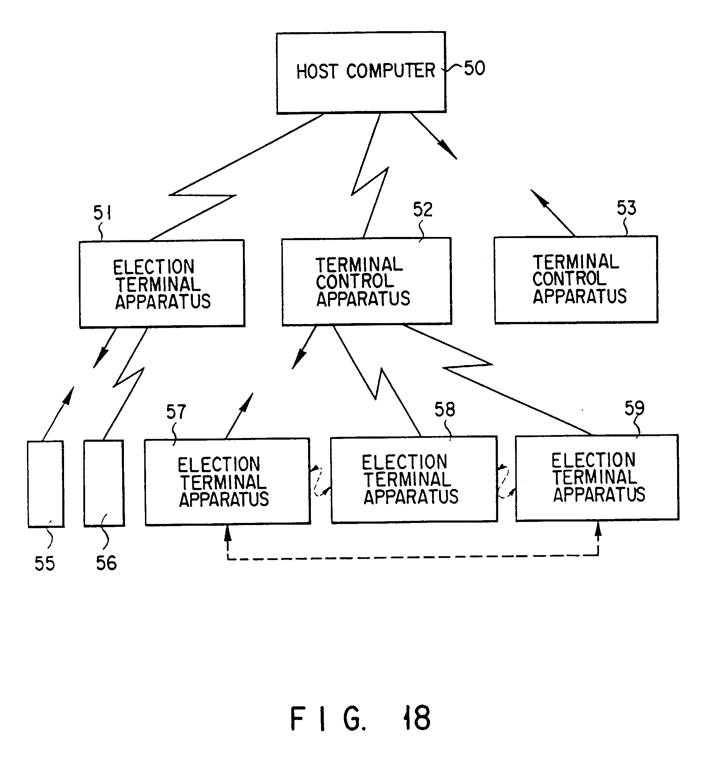

Fig. 18 shows a voting/totaling system constituted by election terminal apparatuses according to the present invention. One or a plurality of election terminal apparatuses 57 to 59 are installed in each polling station. Vote count data of each candidate, stored in a corresponding one of vote count buffers 318a to 318n of each election terminal apparatus, is transmitted to a terminal control apparatus 52 through a communication interface 16 by wire or radio. For example, the terminal control apparatus 52 is installed in each special area. The terminal control apparatus 52 receives vote count data stored in the respective election terminal apparatuses and totals the vote count data in units of candidates. In addition, the vote count data totaled by the terminal control apparatus 52 are transmitted to a host computer 50 by wire or radio. The host computer 50 totals the vote count data transmitted from terminal control apparatuses 52 and 53 or election terminal apparatuses 51.

In addition, for example, a terminal control function may be added to each election terminal apparatus 51, and a plurality of election terminal apparatuses may be connected to each other by wire or radio, as indicated by a broken line in Fig. 18, so that vote count data are transferred to each other to total the vote count data. Furthermore, a voting processing function may be added to the terminal control apparatus 53, and the apparatus 53 may be directly connected to the host computer 50 to control data transfer.

The present invention is not limited the above-described embodiments. Various changes and modifications can be made within the scope of the invention as defined by the appended claims.

## Claims

1. A vote input terminal apparatus including a tablet (5) and a display (6) integrated into a unit (2), means (3) for designating a position on said tablet (5), means (10, 12, 13, 29) for detecting the designated position, and display control means (11) for controlling said display said apparatus, comprising:
first display means (6, 11, 12, 15, B5) for displaying numbers (41a, 41b) assigned to or names of some or all of the candidates who may be voted for;
first designating means (3, 10) for selecting one of the candidates displayed by said first display means;
second display means (6, 11, 12, 15, B11) for displaying the name of the candidate selected by said first designating means (3);
second designating means (3, 10) for confirming a voting operation with respect to the candidate displayed by said second display means; and
means (12, 13, 29) for storing vote information input by said second designating means,
characterised in that the second display means (6, 11, 12, 15, B11) is arranged to display, in addition to the selected candidate name, the corresponding party name, the candidate age, and a photographic image of the face of the selected candidate.

2. The apparatus according to claim 1, characterised by third designating means (44b) for cancelling the voting operation with respect to the candidate displayed by said second display means.

3. The apparatus according to claim 1, 2, or 3,
characterized in that said unit (2) also has means for recognising a character written on said tablet, and the first designating means (3, 10) is arranged to select one of the candidates displayed by said first display means on the basis of a recognition result obtained by said recognition means.

4. The apparatus according to claim 1, 2, or 3,
characterized by further comprising means (60-62) for checking eligibility of a voter.

5. The apparatus according to claim 4, characterized by further comprising means (60-62) for invalidating display of the list of the candidates and/or parties, or a selecting operation performed by the voter in accordance with an eligibility check result.

6. The apparatus according to claim 1 or 2, characterized by further comprising a plurality of election terminal apparatuses (55-59), each identical to said apparatus, and a terminal control apparatus (51-53) for managing said terminal apparatus, said terminal control apparatus being arranged to receive and total vote count data respectively obtained by said plurality of election terminal apparatuses (55-59).

7. The apparatus according to claim 6, characterized by wire or radio means for transferring the vote count data totaled by said terminal control apparatus (51-53) to a center machine (50), so as to be totaled.

8. The apparatus according to claim 1 or 2, characterized in that a plurality of election terminal apparatuses (55-59), each identical to said apparatus, are connected through lines, and an election terminal apparatus is arranged to serve as a master apparatus of said election terminal apparatuses, the master apparatus (50) being arranged to receive and total vote count data respectively obtained by said election terminal apparatuses (55-59).

9. The apparatus according to claim 8, characterized by wire or radio means for transferring the vote count data totaled by the master apparatus to a center machine (50) by wire or radio means so that the vote count data are totaled by said center machine (50).

10. The apparatus according to claim 1 or 2, characterized by further comprising means for determining on the basis of input information for identifying a voter whether the voter has the right to vote.

11. The apparatus according to claim 1 or 2, characterized in that there is further provided at least one server unit to which a plurality of pen input/display units (2) are connected, and a large computer (50) connected to said server unit (55-59) through a line;
and in that said server unit is arranged to total pieces of vote information supplied from said plurality of pen input/display units (2), and to transmit the totaled vote information to said large computer (50).

12. The apparatus according to claim 11, characterized in that there is further provided:
means for displaying party names;
selection means (3) for selecting one of the party names displayed by said first display means on the basis of a recognition result obtained by said recognition means, and
means for confirming a voting operation with respect to the party selected by said selection means.

## Patentansprüche

1. Stimmeingabe-Terminaleinrichtung mit einem Tablett (5) und einer Anzeige (6), die in einer Einheit (2) angeordnet sind, einer Einrichtung (3) zur Bestimmung einer Position auf dem Tablett (5), einer Einrichtung (10, 12, 13, 29) zur Erfassung der bestimmten Position, und einer Anzeigesteuereinrichtung (11) zur Steuerung der Anzeige, umfassend:
eine erste Anzeigeeinrichtung (6, 11, 12, 15, B5) zur Anzeige von Zahlen (41a, 41b), die Namen von einigen oder allen von den Kandidaten zugewiesen sind, für die gestimmt werden kann;
eine erste Bestimmungseinrichtung (3, 10) zur Auswahl von einem von den Kandidaten, die mittels der ersten Anzeigeeinrichtung angezeigt werden;
eine zweite Anzeigeeinrichtung (6, 11, 12, 15, B11) zur Anzeige des Namens des Kandidaten, der mittels der ersten Bestimmungseinrichtung (3) ausgewählt worden ist;
eine zweite Bestimmungseinrichtung (3, 10) zur Bestätigung eines Stimmvorgangs bezüglich des Kandidaten, der mittels der zweiten Anzeigeeinrichtung angezeigt wird; und
eine Einrichtung (12, 13, 29) zur Speicherung von Stimminformationen, die mittels der zweiten Bestimmungseinrichtung eingegeben worden sind;
**dadurch gekennzeichnet**, daß die zweite Anzeigeeinrichtung (6, 11, 12, 15, B11) ausgestaltet ist, zusätzlich zu dem ausgewählten Kandidatennamen dem entsprechenden Parteinamen, das Alter des Kandidaten, und ein fotografisches Bild des Gesichts des ausgewählten Kandidaten anzuzeigen.

2. Einrichtung nach Anspruch 1, **gekennzeichnet durch** eine dritte Bestimmungseinrichtung (44b) zur Löschung des Stimmvorgangs bezüglich des mittels der zweiten Anzeigeeinrichtung angezeigten Kandidaten.

3. Einrichtung nach Anspruch 1, 2 oder 3, **dadurch gekennzeichnet**, daß die Einrichtung (2) ebenso eine Einrichtung zur Erkennung eines Zeichens aufweist, das auf dem Tablett geschrieben worden ist, und die erste Bestimmungseinrichtung (3, 10) ausgestaltet ist, einen der mittels der ersten Anzeigeeinrichtung angezeigten Kandidaten auf der Basis eines Erkennungsergebnisses, das mittels der Erkennungseinrichtung erhalten wird, auszuwählen.

4. Einrichtung nach Anspruch 1, 2 oder 3, **dadurch gekennzeichnet**, daß sie des weiteren eine Einrichtung (60-62) zur Überprüfung einer Berechtigung eines Wählers umfaßt.

5. Einrichtung nach Anspruch 4, **dadurch gekennzeichnet**, daß sie des weiteren eine Einrichtung (60-62) zur Aufhebung einer Anzeige von der Liste von Kandidaten und/oder Parteien oder eines Auswahlvorgangs, der durch den Wähler ausgeführt worden ist, in Übereinstimmung mit einem Berechtigungsüberprüfungsergebnis, umfaßt.

6. Einrichtung nach Anspruch 1 oder 2, **dadurch gekennzeichnet,** daß sie des weiteren eine Vielzahl von Wahlterminaleinrichtungen (55-59) umfaßt, die jeweils identisch zu der Einrichtung sind, und eine Terminalsteuereinrichtung (51-53) zur Verwaltung von Terminaleinrichtungen, wobei die Terminalsteuereinrichtung ausgestaltet ist, Stimmenzähldaten, die jeweils von der Vielzahl von Wahlterminaleinrichtungen (55-59) erhalten worden, zu empfangen und aufzusummieren.

7. Einrichtung nach Anspruch 6, **gekennzeichnet durch** eine Draht- oder Funkeinrichtung zur Übertragung der Stimmenzähldaten, die mittels der Terminalsteuereinrichtung (51-53) aufsummiert worden sind, zu einer zentralen Einrichtung (15), um aufsummiert zu werden.

8. Einrichtung nach Anspruch 1 oder 2, **dadurch gekennzeichnet,** daß eine Vielzahl von Wählterminaleinrichtungen (55-59), die jeweils identisch mit der Einrichtung sind, durch Leitungen verbunden sind, und eine Wahlterminaleinrichtung ausgestaltet ist, um als eine Mastereinrichtung von den Wahlterminaleinrichtungen zu dienen, wobei die Mastereinrichtung (50) ausgestaltet ist, Stimmenzähldaten, die jeweils mittels den Wahlterminaleinrichtungen (55-59) erhalten worden sind, zu empfangen und aufzusummieren.

9. Einrichtung nach Anspruch 8, **gekennzeichnet durch** eine Draht- oder Funkeinrichtung zur Übertragung der Stimmenzähldaten, die mittels der Mastereinrichtung aufsummiert worden sind, zu einer zentralen Einrichtung (50) über eine Draht- oder Funkeinrichtung, so daß die Stimmenzähldaten durch die zentrale Einrichtung (50) aufsummiert werden.

10. Einrichtung nach Anspruch 1 oder 2, **dadurch gekennzeichnet**, daß sie des weiteren eine Einrichtung umfaßt, zur Bestimmung, ob der Wähler das Wahlrecht hat, auf der Basis von Eingabeinformationen zur Identifizierung eines Wählers.

11. Einrichtung nach Anspruch 1 oder 2, **dadurch gekennzeichnet**, daß des weiteren zumindest eine Servereinrichtung zur Verfügung gestellt ist, mit der eine Vielzahl von Stifteingabe/Anzeigeeinrichtungen (2) verbunden sind, und ein großer Computer (50), der durch eine Leitung mit der Servereinrichtung (55-59) verbunden ist;
und daß die Servereinrichtung ausgestaltet ist, Teile von Stimminformationen, die von der Vielzahl von Stifteingabe/Anzeigeeinrichtungen (2) zugeführt werden, aufzusummieren, und die aufsummierten Stimminformationen zu dem großen Computer (50) zu übertragen.

12. Einrichtung nach Anspruch 11, **gekennzeichnet durch**:
eine Einrichtung zur Anzeige von Parteinamen;
eine Auswahleinrichtung (3) zur Auswahl von einem von den Parteinamen, die mittels der ersten Anzeigeeinrichtung angezeigt werden, auf der Basis eines Erkennungsergebnisses, das mittels der Erkennungseinrichtung erhalten wird, und
eine Einrichtung zur Bestätigung eines Stimmabgabevorgangs bezüglich der Partei, die mittels der Auswahleinrichtung ausgewählt worden ist.

## Revendications

1. Appareil de terminal de saisie de vote comprenant une tablette (5) et un dispositif d'affichage (6) intégré en une unité (2), un moyen (3) destiné à désigner une position sur ladite tablette (5), un moyen (10, 12, 13, 29) destiné à détecter la position désignée et un moyen de commande d'affichage (11) destiné à commander ledit dispositif d'affichage, ledit appareil comprenant :
un premier moyen d'affichage (6, 11, 12, 15, B5) destiné à afficher des numéros (41a, 41b) affectés à certains ou à la totalité des candidats ou des noms de ceux-ci, pour lesquels on peut voter,
un premier moyen de désignation (3, 10) destiné à sélectionner l'un des candidats affichés par ledit premier moyen d'affichage,
un second moyen d'affichage (6, 11, 12, 15, B11) destiné à afficher le nom du candidat sélectionné par ledit premier moyen de désignation (3),
un second moyen de désignation (3, 10) destiné à confirmer une opération de vote concernant le candidat affiché par ledit second moyen d'affichage, et
un moyen (12, 13, 29) destiné à mémoriser des informations de vote saisies par ledit second moyen de désignation,
caractérisé en ce que le second moyen d'affichage (6, 11, 12, 15, B11) est agencé de façon à afficher, en plus du nom du candidat sélectionné, le nom du parti correspondant, l'âge du candidat, et une image photographique du visage du candidat sélectionné.

2. Appareil selon la revendication 1, caractérisé par un troisième moyen de désignation (44b) destiné à annuler l'opération de vote en ce qui concerne le candidat affiché par ledit second moyen d'affichage.

3. Appareil selon la revendication 1, 2 ou 3, caractérisé en ce que ladite unité (2) comporte également un moyen destiné à reconnaître un caractère écrit sur ladite tablette, et le premier moyen de désignation (3, 10) est agencé pour sélectionner l'un des candidats affichés par ledit premier moyen d'affichage sur la base du résultat de la reconnaissance obtenu par ledit moyen de reconnaissance.

4. Appareil selon la revendication 1, 2 ou 3, caractérisé en ce qu'il comporte en outre un moyen (60 à 62) destiné à contrôler la qualification d'un électeur.

5. Appareil selon la revendication 4, caractérisé en ce qu'il comprend en outre un moyen (60 à 62) destiné à invalider l'affichage de la liste des candidats et/ou des partis, ou une opération de sélection exécutée par l'électeur conformément à un résultat de contrôle de qualification.

6. Appareil selon la revendication 1 ou 2, caractérisé en ce qu'il comprend en outre une pluralité d'appareils de terminaux d'élection (55 à 59), chacun étant identique audit appareil, et un appareil de commande de terminaux (51 à 53) destiné à gérer ledit appareil de terminal, ledit appareil de commande de terminaux étant agencé pour recevoir et totaliser les données de comptage des voix obtenues respectivement par ladite pluralité d'appareils de terminaux d'élection (55 à 59).

7. Appareil selon la revendication 6, caractérisé par un moyen de câble ou de radio destiné à transférer une donnée de comptage de voix totalisées par ledit appareil de commande de terminaux (51 à 53) vers une machine centrale (50) de façon à ce qu'elle soit totalisée.

8. Appareil selon la revendication 1 ou 2, caractérisé en ce qu'une pluralité d'appareils de terminaux d'élection (55 à 59), chacun étant identique audit appareil, sont reliés par l'intermédiaire de lignes, et un appareil de terminal d'élection est agencé pour servir en tant qu'appareil maître desdits appareils de terminaux d'élection, l'appareil maître (50) étant agencé de façon à recevoir et à totaliser les données de comptage de voix respectivement obtenues par lesdits appareils de terminaux d'élection (55 à 59).

9. Appareil selon la revendication 8, caractérisé par un moyen de câble ou de radio destiné à transférer les données de comptage des voix totalisées par l'appareil maître vers une machine centrale (50) par un moyen de câble ou de radio de sorte que les données de comptage des voix sont totalisées par ladite machine centrale (50).

10. Appareil selon la revendication 1 ou 2, caractérisé en ce qu'il comprend en outre un moyen destiné à déterminer sur la base des informations saisies en vue d'identifier un électeur, si l'électeur a le droit de voter.

11. Appareil selon la revendication 1 ou 2, caractérisé en ce que l'on prévoit en outre au moins une unité de serveur à laquelle une pluralité d'unités de saisie par crayon/affichage sont reliées, et un ordinateur principal (50) relié à ladite unité de serveur (55 à 59) par l'intermédiaire d'une ligne,
et en ce que ladite unité de serveur est agencée pour totaliser les éléments d'informations de voix fournis à partir de ladite pluralité d'unités de saisie par crayon/affichage (2), et pour transmettre les informations de voix totalisées vers ledit ordinateur principal (50).

12. Appareil selon la revendication 11, caractérisé en ce que l'on prévoit en outre :
un moyen destiné à afficher les noms des partis,
un moyen de sélection (3) destiné à sélectionner l'un des noms des partis affichés par ledit premier moyen d'affichage sur la base du résultat de la reconnaissance obtenu par ledit moyen de reconnaissance, et
un moyen destiné à confirmer une opération de vote en ce qui conceme le parti sélectionné par ledit moyen de sélection.
